# EUROPEAN PATENT APPLICATION

(11) **EP 1 684 060 A1**
(43) Date of publication of application: **26.07.2006**
(21) Application number: 04792609.2
(22) Date of filing: 19.10.2004
(51) Int. Cl.: G01N 21/03

(54) **FLUORESCENCE MEASURING DEVICE**

(30) Priority: 14.11.2003 JP 2003385004
(71) Applicant: HAMAMATSU PHOTONICS K.K., Hamamatsu-shi, Shizuoka-ken 435-8558 (JP)
(72) Inventor: TAGUCHI, Takeshi, c/o Hamamatsu Photonics K.K., Hamamatsu-shi, Shizuoka 435-8558 (JP); HIRAMATSU, Mitsuo, c/o Hamamatsu Photonics K.K., Hamamatsu-shi, Shizuoka 435-8558 (JP)
(74) Representative: Grünecker, Kinkeldey, Stockmair & Schwanhäusser Anwaltssozietät
(86) International application number: PCT/JP2004/015440
(87) International publication number: WO 2005/047868

(57) **Abstract**

The present invention relates to a fluorescence measuring apparatus having a structure enabling fluorescence measurement of a microvolume sample to be made readily in a short time. The fluorescence measuring apparatus comprises a pumping light source, a pipette device, a tip, attached to the pipette device, and a fluorescence detection system. The pipette device is arranged from a pipette and a pipette adapter having a pumping light introducing structure for introducing pumping light into an internal space, and a fluorescent sample taken in from a suction inlet is held at a front end of the tip. The pumping light from the pumping light source is irradiated onto the fluorescent sample at the front end of the tip via the internal space of the pipette adapter by means of the pumping light introducing structure, and fluorescence is emitted from the fluorescent sample. The fluorescence detection system receives at least a part of the fluorescence generated as a result of this pumping light irradiation.

## Description

### Technical Field

The present invention relates to a fluorescence measuring apparatus that detects fluorescence emitted from a sample irradiated with pumping light.

### Background Art

In a wide variety of fields, including the pharmacological industry, food industry, chemical industry, agriculture, forestry, and fishery, sample analysis by measurement of fluorescence is performed in carrying out research and development of new drugs, screening of enzymes, analysis of physiologically active substances and other biological trace functional substances, etc. In analyzing nucleic acids, proteins, and other biological samples that are important in bio-related fields, since the biological sample to be measured is of a microvolume in many cases and yet sample quantification is also important, analysis is performed, for example, by a method such as that described below.

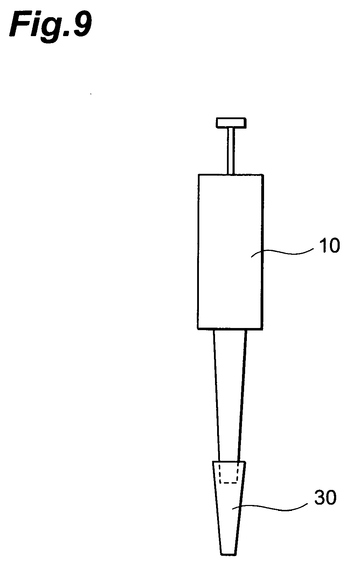

That is, in a conventional fluorescence measurement, a pipette 10 and a tip 30, such as those shown in Fig. 9 are used. A sample is measured into the tip 30, attached to a front end of the pipette 10, and this sample is transferred into a special microassay cell. Pumping light is then irradiated from a side onto the cell containing the sample, and among the fluorescence emitted from the sample, the fluorescence emitted to a side (in a direction that differs from the direction of pumping light irradiation) is detected by a photodetector.

In a method disclosed in Patent Document 1, pumping light is irradiated from above onto a cell containing a sample, and among the fluorescence emitted from this sample, the fluorescence that is emitted upward with respect to the cell is detected by a photodetector.

In a method disclosed in Patent Document 2, pumping light is irradiated from above onto a cell containing a sample, and among the fluorescence emitted from this sample, the fluorescence emitted downward with respect to the cell is detected by a photodetector.
Patent Document 1: Japanese Published Unexamined Patent Application No. Hei 5-38297
Patent Document 2: Japanese Published Unexamined Patent Application No. 2002-71566

### Disclosure of the Invention

### Problem to be Solved by the Invention

The inventors have studied conventional fluorescence measurements in detail, and as a result, have found problems as follows.

Namely, when a fluorescence measurement is to be made upon transferring a sample from a tip into a cell as in the conventional fluorescence measurement, the cell, which is generally expensive, must be washed and dried after use to enable repeated use. The cell may thus break during washing, etc., and is not easy to handle. Also, though reuse of the cell leads to the possibility of contamination, it is not easy to wash the cell adequately.

Also, in a case where another reaction is to be carried out on the sample after the fluorescence measurement, the sample contained in the cell for fluorescence measurement must be recovered. However, the sample recovery rate is inadequate with conventional fluorescence measurements, and there is also the possibility of contamination of the sample in the recovery process. The sample transfer from the tip to the cell, and the washing, drying, etc., of the cell are also time-consuming.

Furthermore, the amount of sample placed in the cell is generally approximately 100µl (microliters), and when there is only an ultramicrovolume of the sample, the sample must be diluted. It is also difficult to recover such a precious sample completely from the cell.

There are thus various issues in regard to measuring fluorescence upon transferring a sample into a cell. A means of irradiating pumping light from a side of a front end of a tip, with the sample being measured into the front end of the tip and not being transferred into a cell, and detecting, from among the fluorescence emitted from the sample, the fluorescence that is emitted from a side of the tip (in a direction that differs from the irradiation direction of pumping light) by a photodetector, may be considered for resolving such issues of measuring fluorescence using a cell. In this case, the sample that is measured into the front end of the tip is of microvolume, and since a tip is generally inexpensive and used only once, the issues that arise when a cell is used do not arise. However, since the cross-sectional shape of the tip is circular, the tip strongly scatters the pumping light and this is unsuitable for fluorescence measurement.

In order to overcome the above-mentioned issues, it is an object of the present invention to provide a fluorescence measuring apparatus having a structure that enables fluorescence measurement of a microvolume of a sample to be performed readily in a short time.

### Means for Solving Problem

A fluorescence measuring apparatus according to the present invention comprises a pumping light source, a pipette device, a tip that is attached to a front end of the pipette device, and a fluorescence detection system. The pumping light source outputs pumping light with a predetermined wavelength. The pipette device is constituted by a pipette having a first internal space and a pipette adapter. The tip has a second internal space and a suction inlet provided at a front end thereof. The pipette adapter is arranged between the pipette and the tip, and has a third internal space that communicates the first internal space of the pipette and the second internal space of the tip. The pipette adapter also has a pumping light introducing structure for guiding the pumping light, emitted into the third internal space from the pumping light source, to the suction inlet side of the tip at which a sample is present. The fluorescence detection system detects the fluorescence emitted from the sample as a result of the pumping light irradiation. When the amount of sample used is minute, the sample that is suctioned from the suction inlet at the front end of the tip is held at the front end of the tip, provided with the suction inlet, during the fluorescence measurement. Meanwhile, when a certain amount of the sample can be used, the sample that is suctioned in from the suction inlet at the front end of the tip is held in the second internal space of the tip that includes the front end of the tip at which the suction inlet is provided.

In the fluorescence measuring apparatus with the above-described structure, the respective internal spaces of the pipette adapter, the pipette, and the tip are continuous in the state in which the pipette adapter is attached to the pipette and the tip. In the state in which a sample has been measured into a portion near the suction inlet at the front end of the tip, the mutually attached pipette adapter, pipette, and tip are positioned at predetermined positions. The pumping light outputted from the pumping light source is guided by the pumping light introducing structure from the exterior of the pipette adapter to the third internal space, and is irradiated towards the suction inlet of the abovementioned tip (irradiated from above the sample liquid surface onto the sample held in the tip). The fluorescence emitted from the sample as a result of this pumping light irradiation is detected by the fluorescence detection system.

In the fluorescence measuring apparatus according to the present invention, the pumping light introducing structure preferably includes a pumping light introducing window, for introducing the pumping light from the exterior of the pipette adapter into the internal space (third internal space) of the pipette adapter, and a mirror reflector that reflects the pumping light, introduced into the internal space via the pumping light introducing window, towards the suction inlet of the tip. In this case, the pumping light is introduced from the exterior of the pipette adapter into the internal space via the pumping light introducing window, and is irradiated toward the suction inlet of the tip after being reflected by the mirror reflector.

In the fluorescence measuring apparatus according to the present invention, it is preferable that the pumping light introducing structure includes an optical fiber whose front end portion is inserted from the exterior of the pipette adapter. One end of the optical fiber is positioned inside the internal space of the pipette adapter, and the pumping light is emitted toward the suction inlet of the tip from this one end. In this case, the pumping light propagates through the optical fiber from the exterior of the pipette adapter, and is irradiated from the one end of the optical fiber in the internal space of the pipette adapter toward the sample suction inlet of the tip. Also, the fluorescence measuring apparatus may comprise an optical system that is disposed near the one end of the optical fiber and condenses the pumping light.

In the fluorescence measuring apparatus according to the present invention, it is preferable that the pumping light introducing structure further includes a first filter that selects just components with a predetermined wavelength band from the pumping light introduced from the exterior of the pipette adapter into the internal space of the pipette adapter and irradiates the selected pumping light components toward the suction inlet of the tip. In this case, since sample irradiation of wavelength components that are unnecessary for fluorescence measurement is reduced, the increasing of the temperature of the sample in the tip is prevented effectively.

In the fluorescence measuring apparatus according to the present invention, it is preferable that the fluorescence detection system includes a fluorescence separating section that selectively takes out the fluorescence from the light arriving from the sample, and a photodetector that detects the fluorescence taken out by the fluorescence separating section. In this case, the fluorescence emitted from the sample as a result of pumping light irradiation is selectively taken out by the fluorescence separating section and detected by the photodetector.

Here, the fluorescence separating section may include a second optical filter that selectively transmits the fluorescence and is disposed to the rear of the sample (exterior of the tip) along an optical axis of pumping light irradiation of the pumping light introducing structure. In this arrangement, the photodetector detects the fluorescence that is transmitted through the second optical filter. In this case, not just the fluorescence emitted from the sample but the pumping light that is transmitted through the sample also arrives at the second optical filter. Of these, whereas the pumping light is blocked by the second optical filter, the fluorescence is transmitted through the second optical filter and is detected by the photodetector. This fluorescence measuring apparatus also has a structure for withdrawing the second optical filter away from the optical axis of the pumping light. The moving of the second optical filter itself may be performed manually or may be realized by a motor or other driving means. The fluorescence measuring apparatus, comprising such a second optical filter withdrawing structure, can be used for measuring the absorbance of the sample and enables fluorescence measurement data and absorbance measurement data to be obtained under equal conditions.

The fluorescence separating section may include a dichroic mirror that is positioned between the pumping light source and the pumping light introducing structure. The dichroic mirror transmits the pumping light from the pumping light source and reflects the fluorescence from the sample. In this arrangement, the photodetector detects the fluorescence reflected by the dichroic mirror. In this case, components of the fluorescence emitted from the sample that proceed in the direction reverse the pumping light irradiation direction are reflected by the dichroic mirror (that is, detected by the photodetector). Though a part of the pumping light irradiated onto the sample is scattered by the sample and a part of the scattered light reaches the dichroic mirror together with the fluorescence, the scattered light will not be incident on the photodetector because this dichroic mirror reflects the fluorescence selectively.

The fluorescence separating section may include a third optical filter that selectively transmits the fluorescence and is disposed at a position outside the tip that does not lie along the optical axis of the pumping light. In this arrangement, the photodetector detects the fluorescence that is transmitted through the third optical filter. In this case, of the fluorescence generated from the sample, that which is made incident on the third optical filter is transmitted through the third optical filter and detected by the photodetector. Though a part of the pumping light irradiated onto the sample is scattered by the sample and a part of the scattered light is made incident on the third optical filter together with the fluorescence, this part is blocked by the third optical filter.

When the fluorescence separating section includes the second or the third optical filter described above, the fluorescence detection system preferably includes a collimating optical system that collimates the light arriving from the sample and makes the light incident on the second or the third optical filter. In this case, since the light can be made incident perpendicularly onto the optical filter, the actual transmittance characteristics of the optical filters that are obtained will be as designed and the fluorescence can be obtained at a high transmittance while blocking the pumping light at a high cutoff rate.

In the fluorescence measuring apparatus according to the present invention, the pipette adapter may have a positioning structure that defines an attachment position of the tip. In this case, because the tip is always attached to the pipette adapter in the same state, there is no variation of the fluorescence measuring position in accordance with the manner of insertion of the tip and the tip can be positioned at a predetermined position of the fluorescence measuring apparatus at good reproducibility.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### Effect of the Invention

In accordance with the present invention, fluorescence measurement of a microvolume of sample can be performed readily and in a short time.

In particular, though in order to measure fluorescence from a microvolume of a substance, an expensive cell for fluorescence measurement, called a microcell, is required with the conventional art, a special cell is made unnecessary with the present invention. The fluorescence measuring apparatus according to the present invention thus enables transferring of a sample into a cell, washing and drying of a cell, and all other time-consuming tasks to be eliminated.

Also, the conventional fluorescence measurement required a minimum volume of approximately 100µl (microliters) of a sample and thus required the sample to be diluted or required a large amount of the sample itself. However, because the fluorescence measuring apparatus according to the present invention enables fluorescence measurement to be made with an ultramicrovolume of several µl to several dozen µl of a sample, the sample not only does not have to be diluted but the amount of sample necessary for fluorescence measurement can also be reduced dramatically. Moreover, since this fluorescence measuring apparatus enables use of the sample as it is in a measurement in a subsequent task, the wasting of sample is eliminated completely.

Furthermore, since whether or not a fluorescent substance is contained can be judged rapidly and simply with the ultramicrovolume of several µl to several dozen µl, whether or not a fluorescent substance is definitely contained can be checked preliminarily in advance before subjecting a biological sample to a separation task by electrophoresis or HPLC. Also, in which fraction a targeted fluorescent (label) substance is contained can be known readily after separation of a biological sample, thus aiding the improvement of the working efficiency.

The fluorescence measuring apparatus according to the present invention is especially effective in cases of making fluorescence measurements of multiple samples and can be applied, for example, to the examination of optimization conditions of enzyme reactions, monitoring of enzyme reactions over time, screening of enzyme inhibitors, etc.

Furthermore, in the fluorescence measuring apparatus according to the present invention, since absorbance and fluorescence can be measured, the absorbance of a nucleic acid or a protein and the fluorescence of a fluorescent label dye can be measured at the same time. Whether or not a fluorescent labeled nucleic acid or protein is contained in a certain fraction can thus be checked.

In accordance with the present invention, a liquid drop of ultramicrovolume can be held in air extremely readily by an extremely normal method using a pipette, which is a most familiar tool among researchers in the biological field.

When a sample is pumped from a side of a tip as in the conventional art, strong scattering occurs due to the tip itself. The pumping from below the sample accompanies scattering near a front end of the tip. In contrast, with the fluorescence measuring apparatus according to the present invention, since the pumping light is made incident onto the sample from above the sample liquid surface (the pumping light is made to propagate inside the tip), scattering of the pumping light by the tip itself can be minimized.

Though a method may be considered in which a liquid drop of a sample is dropped onto a glass substrate and fluorescence emitted from this sample is detected upon irradiating pumping light onto the sample by using, for example, an optical fiber, since contamination becomes an issue in biological fields, a sample that has been dropped from a pipette cannot be used in a subsequent experiment, even if it is recovered. The recovery also cannot be performed completely. In contrast, the fluorescence measuring apparatus according to the present invention enables fluorescence measurement to be performed simply and rapidly without causing contamination and without waste.

### Brief Description of the Drawings

Fig. 1 is a view showing an arrangement of a pipette device which can be applied to a fluorescence measuring apparatus according to the present invention;
Fig. 2 is a sectional view showing an arrangement of a pipette adapter shown in Fig. 1;
Fig. 3 is a view showing an arrangement of a first embodiment of the fluorescence measuring apparatus according to the present invention;
Fig. 4 is a view showing an arrangement of a second embodiment of the fluorescence measuring apparatus according to the present invention;
Fig. 5 is a view showing an arrangement of a third embodiment of the fluorescence measuring apparatus according to the present invention;
Fig. 6 shows views for explaining a pipette positioning method;
Fig. 7 is a sectional view showing an arrangement of a modification example of the pipette adapter;
Fig. 8 is a graph showing results of fluorescence measurements made using the fluorescence measuring apparatus according to the third embodiment; and
Fig. 9 is a view showing a conventional arrangement of a pipette and a tip.

### Description of the Reference Numerals

1-3...fluorescence measuring apparatus; 4...pipette device; 10...pipette; 20, 120...pipette adapter; 21,121...pipette attachment portion; 22, 122...tip attachment portion; 23 ... pumping light introducing window; 24...mirror reflector; 24a...bandpass filter; 25, 123...optical fiber; 26, 42, 51, 124...lens; 30...tip; 31...suction inlet; 41...pumping light source; 43...aperture; 44...dichroic mirror; 52...optical filter; 53...photodetector filter; 54...motor; and 32, 22a... stopper.

### Best Modes for Carrying Out the Invention

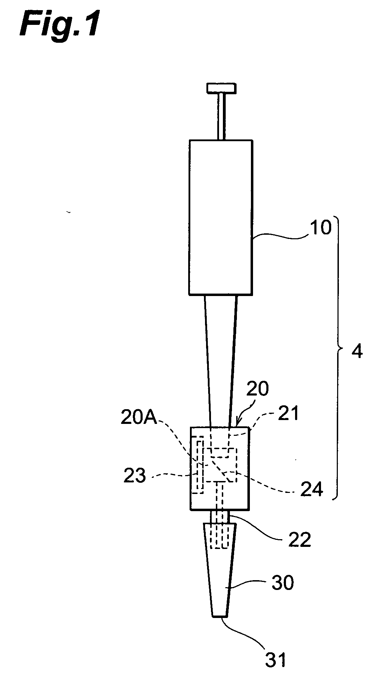

In the following, embodiments of a fluorescence measuring apparatus according to the present invention will be explained in detail with reference to Figs. 1 to 8. In the explanation of the drawings, constituents identical to each other will be referred to with numerals identical to each other without repeating their overlapping descriptions.

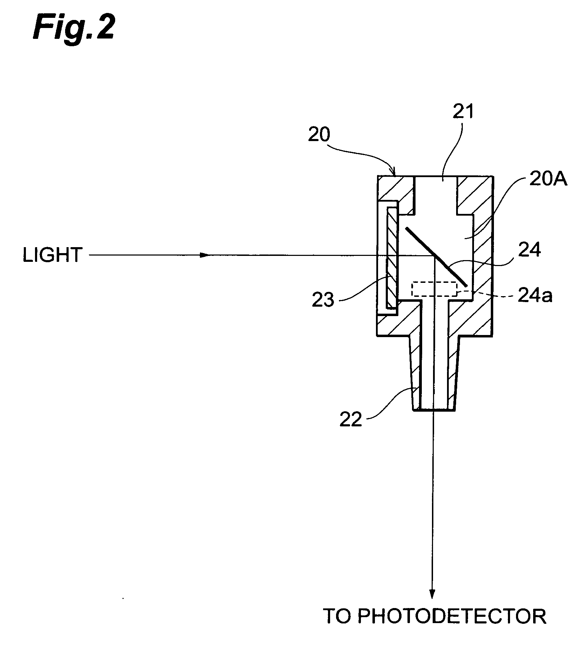

First, a pipette device which is applied to a fluorescence measuring apparatus shall be described. Fig. 1 is a view showing an arrangement of a pipette device which to can be applied a fluorescence measuring apparatus according to the present invention. In Fig. 1, a tip 30 that is attached to a front end of a pipette device 4 is also shown. Fig. 2 is a sectional view showing an arrangement of a pipette adapter 20 that makes up a part of pipette device 4 shown in Fig. 1.

In Fig. 1, the pipette device 4 is arranged from a pipette 10 and pipette adapter 20. The pipette device 4 shown in Fig. 1 differs from the conventional device shown in Fig. 9 in that the pipette adapter 20 is provided between the pipette 10 and the tip 30. A conventional pipette and tip may be used as the pipette 10 and the tip 30. The pipette 10 and the pipette adapter 20 may be arranged integrally or may be arranged as mutually separate members that are detachable. However, the pipette device 4 is handled more readily when it is arranged as an integral member.

As shown in Fig. 2, the pipette adapter 20 has a pipette attachment portion 21, into which a front end of the pipette 10 is inserted, and a tip attachment portion 22, onto which the tip 30 is attached. The pipette adapter 20 is attachable between the pipette 10 and the tip 30. The pipette adapter 20 has an internal space 20A that communicates respective internal spaces of the pipette 10 and the tip 30 when the pipette adapter 20 is attached. The junction between the pipette adapter 20 and the pipette 10 and the junction between the pipette adapter 20 and the tip 30 need to be highly airtight to hold and stop a sample inside the tip 30. Each of the pipette attachment portion 21 and the tip attachment portion 22 is thus preferably coated with a material of excellent airtightness, such as a rubber-like material or a polymer, and in particular, an O-ring formed of a rubber-like material or other airtightness maintaining member is preferably sandwiched between the pipette attachment portion 21 and the pipette 10.

The pipette adapter 20 has a pumping light introducing window 23, for introducing the pumping light from the exterior into the internal space 20A, and a mirror reflector 24 that reflects the pumping light, introduced into the internal space 20A via the pumping light introducing window 23, toward a suction inlet 31 of the tip 30 via an opening of the tip attachment portion 22. The pumping light introducing window 23 is preferably an optical filter that selectively transmits only components with a predetermined wavelength band necessary for fluorescence measurement of a sample from among the pumping light introduced into the internal space 20A from the exterior. Likewise, the mirror reflector 24 is also preferably a member that selectively reflects only the components with the predetermined wavelength band among the pumping light introduced into the internal space 20A. Or, in this fluorescence measuring apparatus 1, a bandpass filter 24a, which selectively transmits only the components with the predetermined wavelength band among the pumping light introduced into the internal space 20A, may be disposed in the internal space 20A of the pipette adapter 20, as shown in Fig. 2,

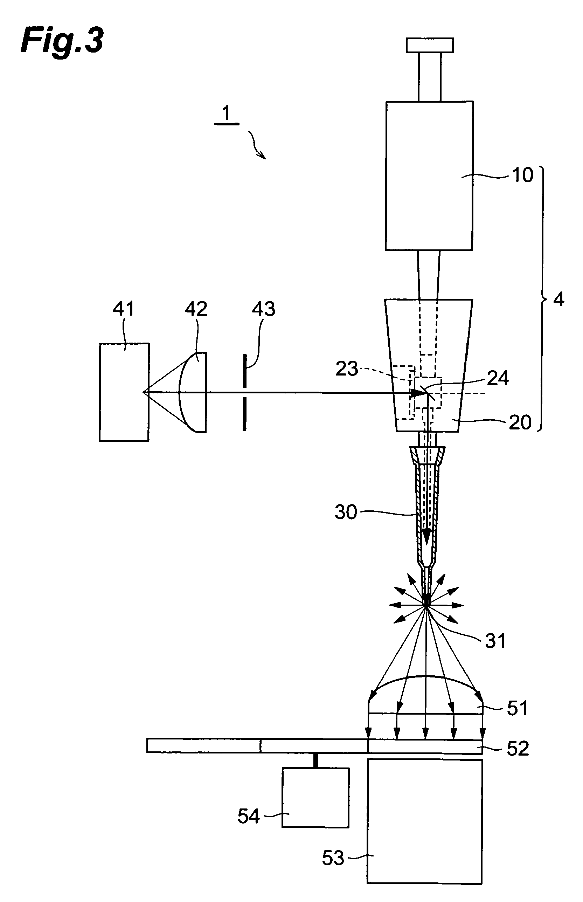

A first embodiment of the fluorescence measuring apparatus according to the present invention shall now be explained. Fig. 3 is a view showing an arrangement of the first embodiment of the fluorescence measuring apparatus according to the present invention. The fluorescence measuring apparatus 1, shown in Fig. 3, includes, in addition to the above-described pipette 10, pipette adapter 20, and tip 30, a pumping light source 41, a lens 42, an aperture 43, a lens 51, an optical filter 52, a photodetector 53, and a motor 54.

An irradiation optical system, from the light source 41 to the aperture 43, and a detection optical system, from the lens 51 to the photodetector 53, are fixed in their mutual relative positions and, for example, are fixed and positioned inside a housing of the apparatus 1. Meanwhile, the pipette device 4, to which the tip 30 is attached, is detachably positioned at a predetermined position. To the position pipette device 4 at the predetermined position, the pipette device 4 may be fixed to a fixed stand housing by using a magnet, or the pipette device 4 may be fitted into a hole provided in the housing. The appropriate optical positioning of the pipette device 4 is enabled by such an arrangement.

The pumping light source 41 outputs pumping light that is irradiated onto a sample that is held upon being measured in from the suction inlet 31 of the tip 30. As such a pumping light source 41, for example, a deuterium lamp that outputs ultraviolet light is suitable. The lens 42 collimates the pumping light output from the pumping light source 41. The aperture 43 transmits a portion of a beam cross section of the pumping light, collimated by the lens 42, towards the pumping light introducing window 23 of the pipette adapter 20. A shutter may be disposed along an optical path of the pumping light between the pumping light source 41 and the pipette adapter 20. In this case, because the duration of pumping light irradiation of the sample is controlled by the shutter, the rising of the sample temperature due to pumping light irradiation of the sample over a long period of time is prevented.

The lens 51, the optical filter 52, and the photodetector 53 are disposed to the rear of the sample (at the opposite side of the mirror reflector 24 across the sample) along an optical axis of irradiation of the pumping light onto the sample from the mirror reflector 24. The lens 51 collimates light that is emitted downward from the sample held at the suction inlet 31 of the tip 30. The collimated light arrives at the optical filter 52. The dimensions of the sample held at the suction inlet 31 of the tip 30 are preferably small enough so that the sample that emits the fluorescence can be regard as a point light source in consideration of the collimating action of the lens 51, and the suction inlet 31 is preferably of a shape that can realize such sample dimensions. The optical filter 52 transmits the fluorescence components in the light collimated by the lens 51 and blocks the pumping light. The fluorescence is thereby taken out selectively. The photodetector 53 receives the fluorescence that has been transmitted through the optical filter 52 and outputs a current signal according to the intensity of this fluorescence. A photomultiplier tube or a photodiode, etc., is suited as such a photodetector 53.

The motor 54 rotates a disk 55 onto which the optical filter 52 is mounted. A plurality of filters that differ in transmission wavelength band are preferably provided as the optical filters 52 on the disk 55. The disk 55 may also be provided with a blocking portion that blocks light and an opening that transmits light as it is. By appropriate setting of the rotation direction of the disk 55 by the motor 54, the optical filter 52 with an appropriate transmittance wavelength band is selected in accordance with the wavelength of the fluorescence emitted from the sample. When a blocking portion and an opening are provided in the disk 55, the blocking portion that blocks the incidence light onto the photodetector 53 is selected or the opening that allows the light arriving from the sample to be incident as it is onto the photodetector 53 is selected by appropriate setting of the rotation direction of the disk 55 by the motor 54. When the optical filter 52 is thus withdrawn from the optical axis or the opening is positioned on the optical axis, the fluorescence measuring apparatus 1 according to this first embodiment can be used for absorbance measurement as well, thus enabling fluorescence measurement data and absorbance measurement data to be obtained under equal conditions. The disk 55, on which the optical filters 52 are mounted, may be rotated manually.

The operations of the fluorescence measuring apparatus 1 according to this first embodiment shall now be explained. First, the tip 30 is attached to the pipette device 4, a sample is measured into the tip 30 from a sample container, and the sample is held at the suction inlet 31 of the tip 30. The sample is not restricted in particular. The sample may be a solution, a semi-solid, or a solid and may be diluted using an appropriate solvent to a concentration that enables fluorescence measurement. Specific examples of biological samples include fluorescent substances and fluorescence labeled substances, such as urine samples, blood samples, body fluid samples, biological tissues, nucleic acids, proteins, and bases. Examples of samples besides biological samples include river water, lake water, seawater, tap water, rainwater, incineration ash, waste, animal and plant samples contained in the environment, and environmental samples. Fluorescent substances and fluorescence labeled substances, such as generally-used metals, ceramics, plastics, extracts and solutions of such substances, gases and gas-absorbing materials, and synthesized substances (analysis samples) can also be cited as examples. Solutions and dispersions in which such substances are dissolved or dispersed as solutes in suitable solvents may be used as fluorescence measurement samples.

While the sample is held at the suction inlet 31 of the tip 30, the pipette device 4 is positioned at a predetermined position of the fluorescence measuring apparatus 1. Fig. 3 shows the optical system in this attachment state. The pumping light is then output from the light source 41. The pumping light output from the pumping light source 41 is collimated by the lens 42, and the collimated pumping light is made incident on the pumping light introducing window 23 of the pipette adapter 20 via the aperture 43. The pumping light that has passed through the pumping light introducing window 23 is reflected by the mirror reflector 24 disposed in the internal space 20A of the pipette adapter 20. The reflected pumping light is then irradiated from above the sample liquid surface onto the sample housed inside the tip 30.

The fluorescence is emitted from the sample as a result of the pumping light irradiation. The fluorescence is emitted in all directions, and a portion thereof is output from the suction inlet 31 of the tip 30 to the exterior. Of this fluorescence, components that are emitted downward and enter the lens 51 are collimated by the lens 51. The collimated components are made perpendicularly incident on the optical filter 52, and just the components that are transmitted through the optical filter 52 are received by the photodetector 53. Current signals are outputted from the photodetector 53 according to the intensity of the received fluorescence. The current signals outputted from the photodetector 53 are furthermore converted into voltage signals, and these voltage signal are analyzed, for example, by a computer. Though a part of the pumping light irradiated onto the sample is transmitted through the sample and emitted in the same direction as the incidence direction, this part is blocked by the optical filter 52. The power of the pumping light that is made incident on the photodetector 53 is thus extremely low.

When the fluorescence measurement ends upon completion of the above operations, the sample for fluorescence measurement that is contained in the tip 30 attached to the pipette device 4 is transferred to an intended reaction container. The step of recovering the sample can thus be eliminated, the occurrence of sample contamination that accompanies recovery is avoided, and fluorescence measurement of the microvolume sample is performed rapidly without the need for an expensive fluorescence measurement cell. Because an inexpensive, commercially-available the tip 30 can be applied, the tip 30 can be discarded after use. Furthermore, because the pumping light is irradiated not from a side of the tip 30 of circular cross-sectional shape but from above the liquid surface of the sample, scattering of the pumping light by the tip 30 is low. The fluorescence measuring apparatus 1 according to the first embodiment thus enables fluorescence measurement of a microvolume sample to be performed readily in a short time.

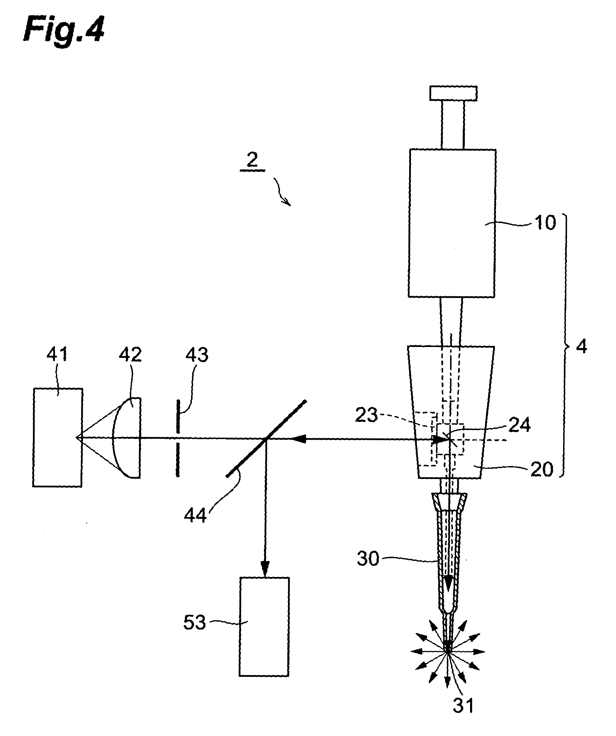

Next, a second embodiment of the fluorescence measuring apparatus according to the present invention shall now be explained. Fig. 4 is a view showing an arrangement of the second embodiment of the fluorescence measuring apparatus according to the present invention. The fluorescence measuring apparatus 2, shown in Fig. 4, includes, in addition to the above-described pipette 10, pipette adapter 20, and tip 30, pumping light source 41, lens 42, aperture 43, a dichroic mirror 44, and photodetector 53.

As compared with the fluorescence measuring apparatus 1 according to the first embodiment shown in Fig. 3, the fluorescence measuring apparatus 2 according to the second embodiment differs in the point that it does not have the lens 51, the optical filter 52 and the motor 54, differs in the point that it has a dichroic mirror 44, and differs in the position at which the photodetector 53 is disposed. The dichroic mirror 44 is disposed incliningly along the optical path of the pumping light between the aperture 43 and the pumping light introducing window 23 of the pipette adapter 20 and transmits the pumping light and reflects the fluorescence. The photodetector 53 detects the fluorescence reflected by the dichroic mirror 44.

Operations of the fluorescence measuring apparatus 2 according to this second embodiment shall now be explained. First, the tip 30 is attached to the pipette device 4, and a sample is measured into the tip 30 from a sample container. The sample that has been measured in is held at the suction inlet 31 of the tip 30, and with this state being maintained as it is, the pipette device 4 is positioned at a predetermined position of the fluorescence measuring apparatus 2. Fig. 4 shows the optical system in this attachment state. The pumping light is then outputted from the pumping light source 41. The pumping light outputted from the pumping light source 41 is collimated by the lens 42. The collimated pumping light passes successively through the aperture 43 and the dichroic mirror 44 and made incident on the pumping light introducing window 23 of the pipette adapter 20. The pumping light that has passed through the pumping light introducing window 23 is reflected by the mirror reflector 24 disposed in the internal space 20A of the pipette adapter 20. The reflected pumping light is then irradiated from above the sample liquid surface onto the sample housed inside the tip 30.

The fluorescence, emitted from the sample as a result of the pumping light irradiation, is emitted in all directions. Of this fluorescence, components that are emitted upward (in a direction opposite the pumping light irradiation direction) are reflected by the mirror reflector 24. The reflected components (portion of the fluorescence) are transmitted through the pumping light introducing window 23 and arrive at the dichroic mirror 44. Just the components that are reflected by the dichroic mirror 44 are then received by the photodetector 53. Current signals are outputted from the photodetector 53 according to the intensity of the received fluorescence. The current signals outputted from the photodetector 53 are converted into voltage signals, and these voltage signals are analyzed, for example, by a computer. Though a part of the pumping light irradiated onto the sample is scattered by the sample and a part of the scattered light is made incident along with the fluorescence on the dichroic mirror 44, this part is transmitted through the dichroic mirror 44. The power of the pumping light that is made incident on the photodetector 53 is thus extremely low.

The fluorescence measuring apparatus 2 according to the second embodiment exhibits the same effects as the fluorescence measuring apparatus 1 according to the above-described first embodiment. In addition, the fluorescence measuring apparatus 2 according to the second embodiment excels in the point that the power of the pumping light and scattered light thereof that are received by the photodetector 53 is extremely low in comparison to the first embodiment.

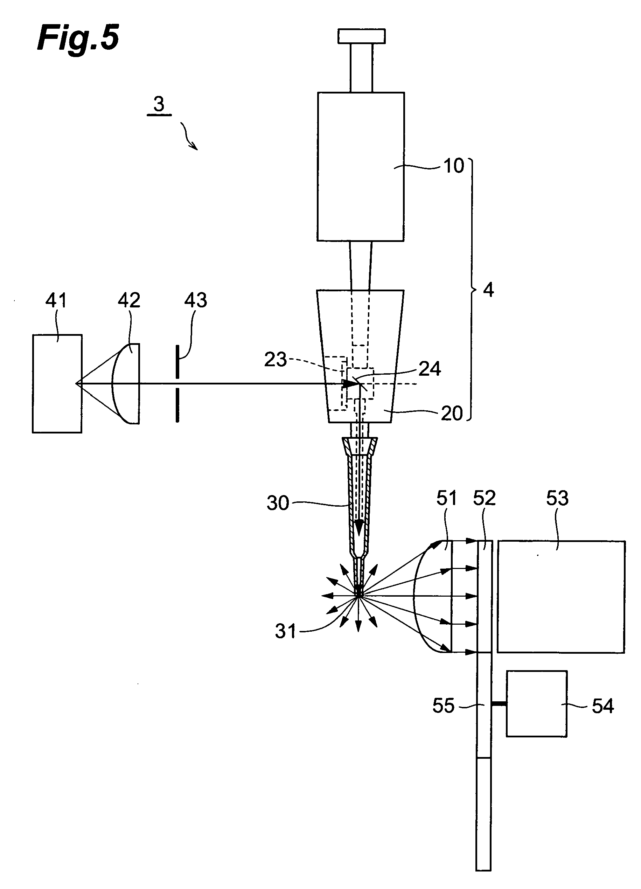

Next, a third embodiment of the fluorescence measuring apparatus according to the present invention shall now be explained. Fig. 5 is a view showing an arrangement of the third embodiment of the fluorescence measuring apparatus according to the present invention. The fluorescence measuring apparatus 3, shown in Fig. 5, includes, in addition to the above-described pipette 10, pipette adapter 20, and tip 30, pumping light source 41, lens 42, aperture 43, lens 51, optical filter 52, photodetector 53, and motor 54.

As compared with the fluorescence measuring apparatus 1 according to the first embodiment shown in Fig. 3, the fluorescence measuring apparatus 3 according to the third embodiment differs in the positions at which the lens 51, the optical filter 52, the photodetector 53, and the motor 54 are disposed. In the third embodiment, the lens 51, the optical filter 52, and the photodetector 53 are disposed at positions that are not along the optical axis of irradiation of the pumping light onto the sample. Preferably, the optical axis of the detection optical system from the lens 51 to the photodetector 53 is orthogonal to the optical axis for pumping light irradiation from the mirror reflector 24 to the sample.

The lens 51 collimates light that is emitted to a side from the sample held at the suction inlet 31 of the tip 30. The collimated light is made incident on the optical filter 52. The optical filter 52 takes out the fluorescence selectively by transmitting the fluorescence among the light collimated by the lens 51 and blocking the pumping light. The photodetector 53 receives the fluorescence that has been transmitted through the optical filter 52 and outputs current signals according to the intensity of this fluorescence.

In the third embodiment, the sample held at the suction inlet 31 of the tip 30 is preferably long in the direction of pumping light irradiation, and the suction inlet 31 is preferably of a shape that can realize such sample dimensions. When the distance through which the pumping light passes through the sample is thus made long, the pumping light absorbing efficiency of the sample is increased and the amount of fluorescence emitted is increased. In this case, the sample emitting the fluorescence can be regarded not as being a point light source but as being a light source that is long in the pumping light irradiation direction. The lens 51 is thus preferably a cylindrical lens. The effective light receiving surface of the photodetector 53 is also preferably long in the pumping light irradiation direction. Also, with the third embodiment since the fluorescence emitted from the sample is detected by the photodetector 53 upon being transmitted through the tip 30, the tip 30 is preferably high in transmittance at the fluorescence wavelength.

Furthermore, the tip 30 must be positioned at a predetermined position of the fluorescence measuring apparatus 30 at good reproducibility while holding the sample that has been measured into the tip 30. The pipette device 4 is positioned at high precision in the fluorescence measuring apparatus 3 is important especially in this third embodiment since the detection optical system for detecting the fluorescence is positioned at the side of the tip 30. Thus in addition to employing the above-described method of fixing the pipette device 4 with respect to the fluorescence measuring apparatus 3, the tip 30 must always be attached at a fixed position of the pipette adapter 20 of the pipette device 4 so that the fluorescence measuring position does not vary in accordance with the manner of insertion of the tip 30.

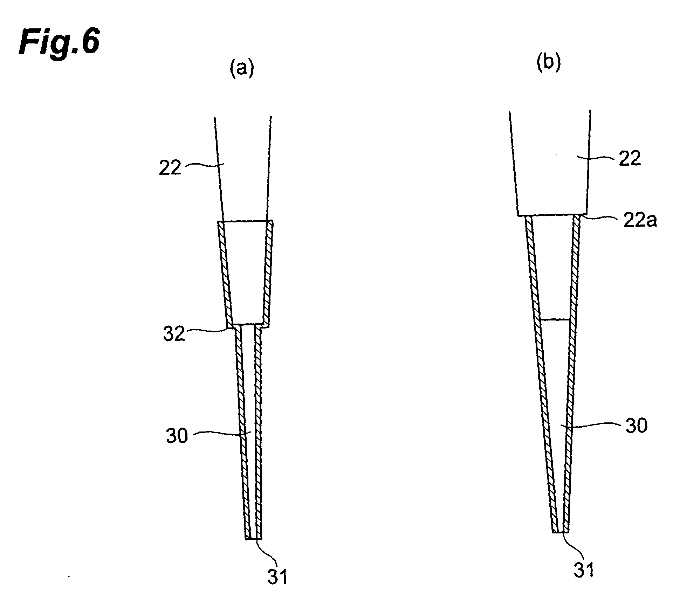

Then, it is preferable that the tip 30 itself or the pipette adapter 20 comprises a positioning structure that defines the attachment position of the tip 30. As such a positioning structure, the providing of a stopper 32, which is a step, at an upper end of the tip 30 as shown in the area (a) of Fig. 6 is preferable. In this case, the stopper 32, which functions as the positioning structure that is provided on the tip 30, contacts a front end of the tip attachment portion 22, and the tip 30 itself can thereby be attached at the fixed position. Also, a stopper 22a, which is a step, may be provided as the positioning structure at a middle portion of the tip attachment portion 22 of the pipette adapter 20 as shown in the area (b) of Fig. 6. The tip 30 itself can be attached at the fixed position by the upper end of the tip 30 contacting the stopper 22a in this case. In both of the structures shown in the areas (a) and (b) of Fig. 6, the tip 30 is always attached at the fixed position with respect to the pipette adapter 20.

Operations of the fluorescence measuring apparatus 3 according to the third embodiment shall now be explained. First, the tip 30 is attached to the pipette device 4, and a sample, measured in from a sample container, is held at the suction inlet 31 of the tip 30. Then with the sample being held at the suction inlet 31, the pipette device 4 is disposed at the predetermined position of the fluorescence measuring apparatus 3. Fig. 5 shows the optical system in this attachment state. The pumping light is then outputted from the pumping light source 41. The pumping light outputted from the pumping light source 41 is collimated by the lens 42. The collimated pumping light passes through the aperture 43 and is made incident on the pumping light introducing window 23 of the pipette adapter 20. The pumping light that has passed through the pumping light introducing window 23 is reflected by the mirror reflector 24 disposed in the internal space 20A of the pipette adapter 20. The reflected pumping light is then irradiated from above the sample liquid surface onto the sample housed inside the tip 3 0.

The fluorescence, emitted from the sample as a result of the pumping light irradiation, is emitted in all directions. Of this fluorescence, components (fluorescence) that are emitted to the side and reach the lens 51 are collimated by the lens 51. The collimated components are then made perpendicularly incident on the optical filter 52. Just the components that are transmitted through the optical filter 52 are then received by the photodetector 53 and current signals are outputted according to the intensity of the received fluorescence. The current signals outputted from the photodetector 53 are converted into voltage signals, and these voltage signals are analyzed, for example, by a computer. Though a portion of the pumping light irradiated onto the sample is scattered by the sample and a part of this scattered light is made incident along with the fluorescence on the optical filter 52, this part is blocked by the optical filter 52. The power of the pumping light that is made incident on the photodetector 53 is thus extremely low.

the fluorescence measuring apparatus 3 according to this third embodiment exhibits the same effects as the fluorescence measuring apparatus 1 according to the above-described first embodiment. In addition, with the fluorescence measuring apparatus 3 according to the third embodiment, the power of the pumping light received by the photodetector 53 is extremely low and yet the power of the fluorescence received by the photodetector 53 is large. The S/N ratio of fluorescence detection is thus excellent. Also, in the fluorescence measuring apparatus 3, by disposing an optical system (an optical filter and a photodetector) for absorbance measurement below the tip 30, fluorescence measurement and absorbance measurement can be performed simultaneously.

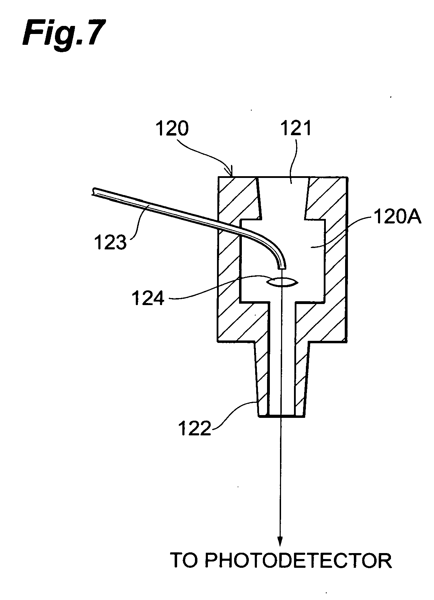

A modification example of the pipette adapter applied to the fluorescence measuring apparatuses 1 to 3 according to the above-described embodiments shall now be explained. Fig. 7 is a sectional view showing an arrangement of the modification example of the pipette adapter. The pipette adapter 120 shown in Fig. 7 has a pipette attachment portion 121, into which the front end of the pipette 10 is inserted, and a tip attachment portion 122, onto which the tip 30 is attached, and can be attached between the pipette 10 and the tip 30. The pipette adapter 120 has an internal space 120A that communicates the respective internal spaces of the pipette 10 and the tip 30 when the pipette adapter 120 is attached. The junction between the pipette adapter 120 and the pipette 10 and the junction between the pipette adapter 120 and the tip 30 need to be highly airtight to hold and stop a sample inside the tip 30. Each of the pipette attachment portion 121 and the tip attachment portion 122 is thus preferably coated with a material of excellent airtightness, such as a rubber-like material or a polymer, and in particular, an O-ring, formed of a rubber-like material, or other airtightness maintaining member is preferably sandwiched between the pipette attachment portion 121 and the pipette 10.

The pipette adapter 120 also has an optical fiber 123 and a lens 124. The optical fiber 123 outputs the pumping light, which propagates through the interior thereof, from one end that is positioned in the internal space 120A. The lens 123 converts the pumping light, outputted from the one end of the optical fiber 123, into parallel light. The pumping light that has been converted into parallel light is irradiated toward the suction inlet 31 of the tip 30 via an opening of the tip attachment portion 122. As with the first embodiment, as an optical filter, which selectively transmits only the components of the predetermined wavelength band among the pumping light introduced into the internal space 120A, a bandpass filter may be disposed in the internal space 120A of the pipette adapter 120 in this modification example as well. Or, the front end of the optical fiber 123 is preferably formed as a spherical lens or a SELFOC lens. In this case, the lens 124 is unnecessary.

The pipette adapter 120 shown in Fig. 7 can be applied in place of the pipette adapter 20 to each of the fluorescence measuring apparatuses 1 to 3 described above. When such a pipette adapter 120 is applied, the pumping light outputted from the pumping light source 41 is inputted from the other end of the optical fiber 123 (end portion of the optical fiber 123 that is positioned at the exterior of the pipette adapter 120) and propagates through the interior of the optical fiber 123 toward the one end of the optical fiber 123 that is positioned inside the internal space 120A. The pumping light emitted from the one end of the optical fiber 123 is irradiated onto the sample in the tip 30 as described above.

The present invention is not restricted to the above-described embodiments and various modifications are possible. For example, each of the apparatuses according to the first and third embodiments can also be applied to quantification of chemiluminescence emitted from a sample. The apparatuses according to the respective embodiments can also be combined, for example, to detect forward scattered light from a sample by the apparatus according to the first embodiment, side scattered light from the sample by the apparatus according to the third embodiment, and the detection results can be analyzed to perform analysis of characteristics of the sample.

Fluorescence measurements using the fluorescence measuring apparatus 3 according to the third embodiment described above shall now be explained. With the sample volume being set to 20µl and the sample concentration being changed in four stages, fluorescence from samples of the respective concentrations were measured five times each using the fluorescence measuring apparatus 3. On each single fluorescence measurement, the pipette device 4 was attached to the fluorescence measuring apparatus 3 to make the measurement, and after the end of measurement, the pipette device 4 was removed from the fluorescence measuring apparatus 3.

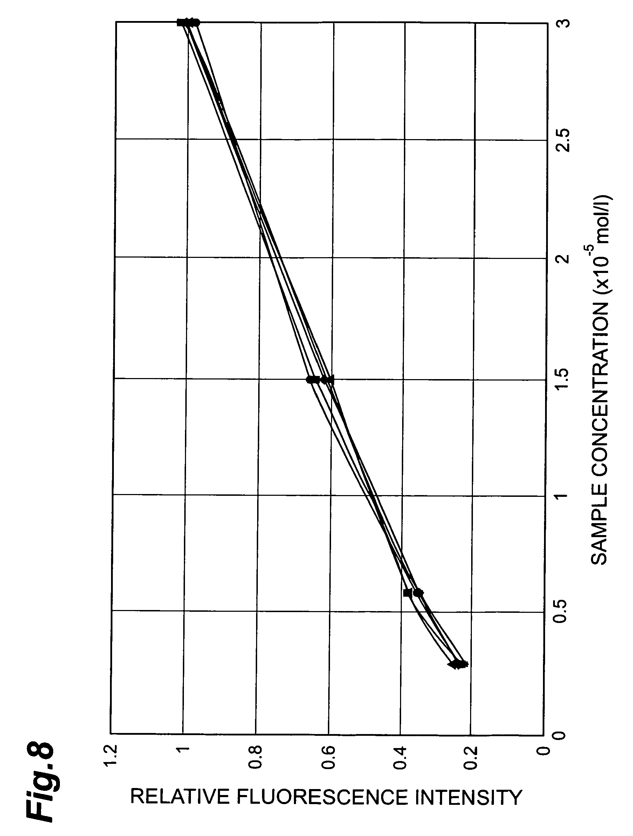

Fig. 8 is a graph showing the results of the fluorescence measurements made using the fluorescence measuring apparatus 3 according to the third embodiment. The abscissa of Fig. 8 indicates the sample concentration and the ordinate indicates the fluorescence intensity. As can be understood from the graph of Fig. 8, within the sample concentration range of these fluorescence measurements, the measured fluorescence intensity is in a substantially linear relationship with the sample concentration and excellent reproducibility is exhibited.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

### Industrial Applicability

The present invention can be applied to making fluorescence measurements in carrying out research and development of new drugs, screening of enzymes, analysis of physiologically active substances and other biological trace functional substances, etc., in a wide variety of fields, including the pharmacological industry, food industry, chemical industry, agriculture, forestry, and fishery.

## Claims

1. A fluorescence measuring apparatus, comprising:
a pumping light source outputting pumping light;
a pipette having a first internal space;
a tip having a second internal space, said tip having a suction inlet, provided at a front end thereof, for suctioning in a sample that emits fluorescence with a predetermined wavelength as a result of irradiation of the pumping light;
a pipette adapter arranged between said pipette and said tip, and having a third internal space which communicates the first internal space of said pipette and the second internal space of said tip, said pipette having a pumping light introducing structure for guiding the pumping light, emitted into the third internal space from said pumping light source, to said suction inlet of said tip; and
a fluorescence detection system for detecting the fluorescence emitted from the sample that has been suctioned in via said suction inlet of said tip.

2. A fluorescence measuring apparatus according to claim 1, further comprising a first optical system, arranged between said tip and said fluorescence detection system, for guiding the fluorescence emitted from the sample to said fluorescence detection system.

3. A fluorescence measuring apparatus according to claim 1, wherein said pumping light introducing structure includes:
a pumping light introducing window for introducing the pumping light from the exterior of said pipette adapter into the third internal space; and
a mirror reflector for reflecting the pumping light, introduced into the third internal space via said pumping light introducing window, towards said suction inlet of said tip.

4. A fluorescence measuring apparatus according to claim 1, wherein said pumping light introducing structure includes an optical fiber through which the pumping light propagates, said optical fiber having a front end portion inserted from the exterior of said pipette adapter into the third internal space and emitting the pumping light from one end thereof positioned in the internal space toward said suction inlet of said tip.

5. A fluorescence measuring apparatus according to claim 4, further comprising a second optical system arranged between the one end of said optical fiber and said suction inlet of said tip, said second optical system condensing the pumping light emitted from the one end of said optical fiber.

6. A fluorescence measuring apparatus according to claim 1, wherein said pumping light introducing structure includes a first optical filter for selectively irradiating just wavelength components with a predetermined wavelength band, among the pumping light introduced from the exterior of said pipette adapter into the third internal space, toward said suction inlet of said tip.

7. A fluorescence measuring apparatus according to claim 1, wherein said fluorescence detection system includes:
a fluorescence separating section for selectively separating the fluorescence from among the light arriving from the sample; and
a photodetector for detecting the fluorescence separated by said fluorescence separating section.

8. A fluorescence measuring apparatus according to claim 7, wherein said fluorescence separating section includes a second optical filter arranged outside said tip and on an optical axis of the pumping light which is directed from said pumping light source toward said suction inlet of said tip via said pumping light introducing structure, said second filter selectively transmitting the fluorescence emitted from the sample, and
wherein said photodetector detects the fluorescence transmitted through said second optical filter.

9. A fluorescence measuring apparatus according to claim 8, further comprising a structure withdrawing said second optical filter, arranged on the optical axis of the pumping light, to a position deviated from the optical axis of the pumping light.

10. A fluorescence measuring apparatus according to claim 7, wherein said fluorescence separating section includes a dichroic mirror for transmitting one of the pumping light and the fluorescence emitted from the sample and reflecting the other of the pumping light and the fluorescence.

11. A fluorescence measuring apparatus according to claim 10, wherein said fluorescence separating section includes a dichroic mirror, arranged between said pumping light source and said pumping light introducing structure, transmitting the pumping light while reflecting the fluorescence emitted from the sample, and
wherein said photodetector detects the fluorescence reflected by said dichroic mirror.

12. A fluorescence measuring apparatus according to claim 7, wherein said fluorescence separating section includes a third optical filter, arranged at a position which is outside said tip and which is deviated from the optical axis of the pumping light, directed from said pumping light source toward said suction inlet of said tip via said pumping light introducing structure, for selectively transmitting the fluorescence emitted from the sample, and
wherein said photodetector detects the fluorescence transmitted through said third optical filter.

13. A fluorescence measuring apparatus according to claim 8, wherein said fluorescence detection system further includes a collimating optical system, arranged between said tip and said second optical filter, for collimating at least a part of the fluorescence emitted from the sample.

14. A fluorescence measuring apparatus according to claim 12, wherein said fluorescence detection system further includes a collimating optical system, arranged between said tip and said third optical filter, for collimating at least a part of the fluorescence emitted from the sample.

15. A fluorescence measuring apparatus according to claim 1, wherein said pipette adapter further comprises a positioning structure for defining an attachment position of said tip.

16. A fluorescence measuring apparatus according to claim 1, wherein said tip further comprises a positioning structure for defining an attachment position of said tip itself.
